# NEW EUROPEAN PATENT SPECIFICATION

(11) **EP 0 192 910 B2**
(45) Date of publication and mention of the opposition decision: **25.08.1993**
(45) Mention of the grant of the patent: 11.05.1988
(21) Application number: 85630024.9
(22) Date of filing: 26.02.1985
(51) Int. Cl.: B60C 3/04, B60C 9/18

(54) **A pneumatic tire**
Luftreifen
Bandage pneumatique

(43) Date of publication of application: 03.09.1986
(73) Proprietor: THE GOODYEAR TIRE & RUBBER COMPANY, Akron, Ohio 44316-0001 (US)
(72) Inventor: Adam, Georges, L-7761 Bissen (LU); Kornelis, Hendrik, L-9281 Diekirch (LU); Hein, Werner, D-5521 Bollendorf (DE)
(74) Representative: Mitscherlich, Hans, Dipl.-Ing.

(56) References cited:
- EP-A- 0 012 694
- EP-A- 0 013 194
- EP-A- 0 072 500
- DE-A- 2 644 452
- FR-A- 2 222 232
- FR-A- 2 383 028
- FR-A- 2 429 681
- Smithers October 1983 Tyre Analyses Report, specification No. 72 87-T (83)
- Smithers September 1981 Tyre Analyses Report, specification No. 7142-T (81)
- Smithers June 1980 Tyre Analyses Report, specification No. 7044-T (80)
- Smithers International Tyre Analyses Report 81-3, specification No. 654-IT (81)
- US patent No. RE.30.527

## Description

This invention relates to radial carcass pneumatic tires for trucks and in particular to heavy duty truck tires, according to the preamble of claim 1. Such a tire is the 15R 22.5 Bridgestone R160 Z tire available to the public before the application date

Heavy duty trucks frequently comprise tractor units and trailer units which have sets of dual tires on the same axles. It is known to replace these sets of dual tires by a single heavy duty tire sometimes referred to as a 'super single' or a wide body radial. These 'super single' radial tires have a number of advantages in that they lower the overall weight of the vehicle, mean fewer tires and hence less cost, and reduce overall rolling resistance.

One problem associated with these low aspect ratio wide body tires (t hat is the ratio of the tire section height to the maximum section width) is that the edges of the tread are subject to harmful deformations due to a build up of stresses in the shoulder region of the tire.

The present invention seeks to reduce the build up of stresses in the tire and thereby increase the service life of the tire.

Accordingly there is provided a truck tire of radial carcass construction, having an aspect ratio SH/SW of approximately 0.65 not exceeding 0.7, where SW is defined as the maximum axial width across the tire as molded, and SH is the maximum radial height of the tread portion at the mid-circumferential plane M-M from a cylindrical plane passing through the heel of the bead portions, a crown region with a ground contacting tread portion of a distinct treadwidth (TW), a belt reinforcement extending circumferentially around the carcass beneath the tread portion and a pair of annular elastomeric wedges inserted between the axially outer margins of the belt reinforcement and the radial carcass, the crown region including an area of concentricity (CM) in which the ground contacting external surface of the tread portion is concentric with the carcass ply, the belt reinforcement extending axially beyond the area of concentricity (CM), wherein
(1) the area of concentricity (CM) extends axially between 0.75 and 0.85 of the treadwidth (TW),
(2) the maximum thickness (WG) of the wedges between the carcass ply and the belt reinforcement is between 0.1 and 0.2 of the maximum thickness (SG) between the mid ply line of the carcass ply and the external surface of said tread portion,
(3) the tire has a cross-sectional configuration in which the tread portion has a radius of curvature TR such that the ratio TR/SW is greater than 2.0,
(4) the belt reinforcement extends a distance (X) of about 7 % of the treadwidth (TW) beyond the area of concentricity (CM) of the tire, characterized in that
(5) the carcass ply follows a natural shape contour from a first point A located radially adjacent each bead portion to a second point B beneath each axially outer edge of the belt reinforcement,
(6) and that said second points B are coincident with the axial extent of said central area of concentricity (CM) of the tread portion,

The invention will be described by way of example and with reference to the following drawings in which
Figure 1 is a cross-sectional view of one half of a prior art low aspect ratio pneumatic tire;
Figure 2 is a section view of one half of a tire according to this invention;
Figure 3 is a bar chart showing test results of the tire of Figure 2 versus the tire of Figure 1.

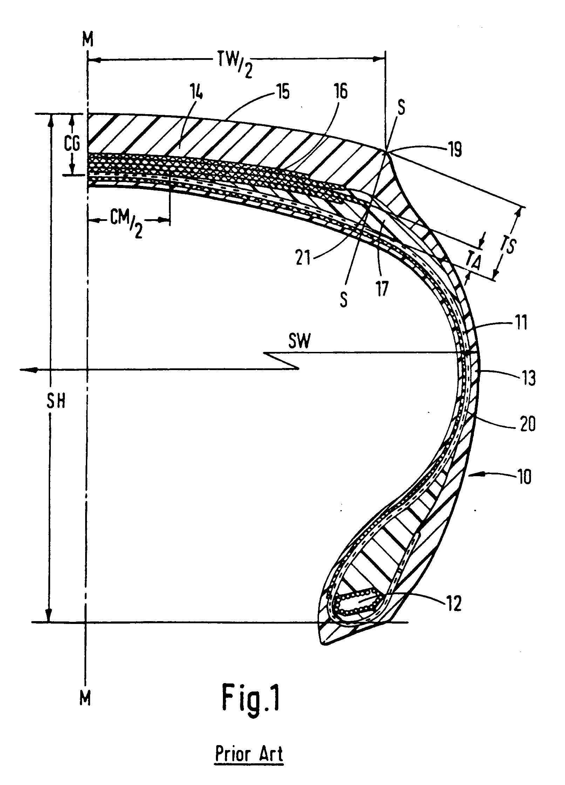

In Figure 1 is shown a cross-sectional view of a prior art radial carcass truck tire 10 which is symmetrical about the mid-circumferential plane M-M of the tire. The mid-circumferential plane M-M is a plane normal to the axis of rotation of the tire and which is located mid-way between the beads of the tire. The tire has a radial carcass ply 11 which extends from one bead 12 to the other bead 12 to reinforce the sidewalls 13 and crown region 14 of the tire. The term radial carcass means a carcass ply in which the reinforcing cords make an angle of about ±10° with a plane containing the axis of rotation of the tire. The crown region 14 of the tire has a ground contacting tread portion 15 with a pair of lateral edges 19 and a circumferentially extending belt reinforcement 16 which surrounds the carcass ply 11 and is located beneath the tread portion 15. A pair of annular elastomeric wedges 17 are inserted between the axially outer edge margins of the belt reinforcement 16 and the carcass ply 11 in order to keep the belt reinforcement flat in radial cross-section and thereby reduce stresses at the belt edge.

The tire illustrated is a 15R22.5 tire which has a low aspect ratio, as defined in its vulcanization mold by the ratio of the section height SH at the mid-circumferential plane to the maximum section width SW, of about 0.65. The tread portion 15 has a tread width TW, where tread width is defined as the maximum axial distance across the footprint of the tire when inflated to a design pressure and subjected to a rated load. The crown region 14 has a mid portion CM in which the tread portion 15 is concentric with the carcass ply 11, that is to say that the distance CG between the carcass mid ply line 20 (shown in dotted line) and the surface of the tread portion is substantially uniform within the mid portion CM which is approximately 30% of TW. Axially outwardly of CM the distance CG increases towards the edges 19 of the tread portion.

At the axial outmost edge 21 of the belt reinforcement 16 the thickness TA of the wedge 17, between the belt edge 21 and the carcass ply 20, but not including any elastomeric coating thereon, is about 20% of the maximum thickness TS between the carcass mid ply line 20 and the tread edge 19 and is measured on a line S-S which is normal to the ply 11 and passes through the tread edge 19.

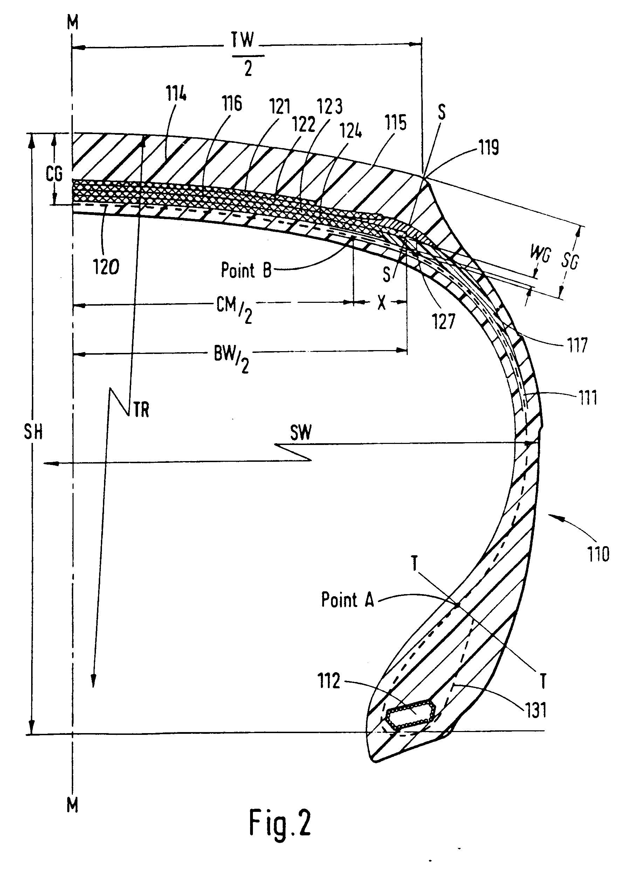

It has been found that tires according to the invention as illustrated with reference to Figure 2 have superior in-service properties in comparison with the previously described prior art tire. In Figure 2 there is illustrated a radial cross-section of a 15R22.5 radial carcass truck tire 110 having an aspect ratio SH/SW which does not exceed 0.7 and is preferably about 0.65. The tire 110 has a radial carcass reinforcing ply 111 which extends between the tire beads 112, and has a circumferentially extending belt reinforcement 116 in the crown region 114 of the tire.

The belt reinforcement 116 in this example comprises four unfolded layers of steel cord reinforced elastomeric plies 121, 122, 123, 124, in which the reinforcing cords in each ply are substantially parallel to each other, and in plies 121, 122, 123, make a small angle of between 15°-30° with the mid-circumferential plane M-M of the tire, and the cords of the innermost ply 124 make an angle of between 40°-60° with the mid-circumferential plane M-M. The reinforcing cords in adjacent plies cross each other at oppositely biased angles. Whilst the illustrated belt reinforcement is shown as being four unfolded belts of various axial widths it is thought that the present invention is applicable to tires having other known and conventional belt reinforcement constructions. For example, the radially innermost belt ply 124 could comprise a single ply as illustrated or perhaps two axially separated plies. Other alternative constructions could comprise a mixture of folded and unfolded plies as is well known.

The crown region 114 has a ground contacting tread portion 115 with a pair of lateral edges 119 spaced apart by a tread width TW. The tread portion 115 has a cross sectional radius of curvature TR which is large in comparison with the section width such that the ratio TR/SW--2.0. According to the invention the thickness CG between the carcass mid ply line 120 and the tread portion 115, in an as-molded tire, is substantially uniform within an area CM which is arranged symmetrically about the mid-circumferential plane M-M and has an axial width of between 75% to 85% of the tread width TW, and preferably about 80%. That is to say that within the area CM the external surface of the tread portion 115 is concentric with the carcass ply 111 forming an area of concentricity CM in the mid portion of the crown region. The thickness CG at the mid-circumferential plane M-M should be between 0.90 and 1.00 of SG when measured on a new tire.

The belt reinforcement 116 has an overall axial width BW such that it extends axially beyond the area of concentricity CM. In this example the overall belt width BW is approximately 94% of the treadwidth TW, that is to say on each side of the mid-circumferential plane M-M the belt reinforcement 116 extends by a distance X of about 7% of the treadwidth TW beyond the area of concentricity.

A pair of annular elastomeric wedges 117 are each inserted between the carcass ply 111 and a respective axial edge margin of the belt reinforcement 116. In this example the radially innermost ply 124 has a lesser axial width than the adjacent outer belt ply 123, and for its whole axial width the innermost ply 124 is substantially parallel with and adjacent to the carcass ply 111. The wedges 117 are inserted between the carcass ply 111 and that portion of the belt ply 123 that extends axially beyond the innermost ply 124 for a distance equal to about 5% of the treadwidth TW. The wedge 117 is preferably formed from an elastomer having a hardness which is lower than that of the tread rubber.

The thickness WG of the wedges 117 when measured between the carcass ply 111 and the belt ply 124 (excluding any belt ply and carcass ply coatings) is between 0.1 and 0.2 of the maximum thickness SG between the carcass mid ply line 120 and the tread portion 115. In this particular case the thickness SG is measured along a line normal to the carcass ply and passing through the lateral edge 119 of the tread portion 115.

A second pair of elastomeric annular wedges 127 is inserted between the axial outer margins of the belt ply 123 and the belt ply 124. These second wedges 127 are formed of an elastomer having similar hardness to that of the tread rubber.

The carcass ply 111 follows a natural contour shape from a point A adjacent each bead portion of the tire, to a point B in the crown region 114 of the tire. The point B is located radially underthe belt reinforcement and is coincident with the maximum axial extent of the area of concentricity CM. The natural contour shape or equilibrium curve is the shape the carcass ply tends to assume as prescribed by its cord path and dimensions when mounted on the rim for which it is designed and inflated to a design pressure. This concept is thoroughly discussed in "Mathematics Underlying the Design of the Pneumatic Tire" by J. F. Purdy. Tires having at least a portion of the carcass ply structure which follows the natural equilibrium curve are illustrated in U.S. Patents Nos. 3,757,844, 3,910,336, and 3,938,575.

The point A is determined by a line T-T, normal to the carcass ply and which passes through the end of the carcass ply turn-up 131.

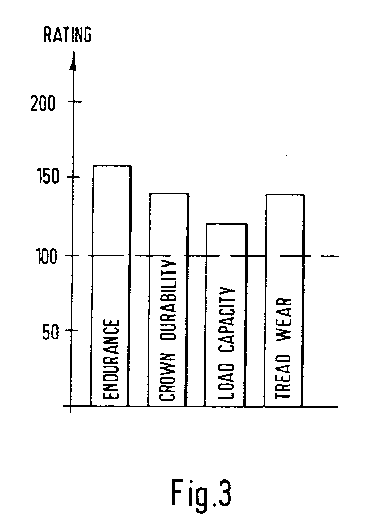

Atire according to the present invention was tested and compared with a prior art tire of the type illustrated in Figure 1. The results of the tests are illustrated in the bar chart shown in Figure 3, in which the performance of the prior art tire is rated at 100, and the performance of the tire according to this invention is given in terms related back to the 100 reference.

The endurance test was a MVSS 119 endurance test under extended load/duration conditions to failure.

The crown durability test was done on 120" (300 cm) smooth fly wheel under a constant speed for a predetermined time period, with periodically increased loads on the tire beginning at 100% rated load and inflation. The tire was inspected after running at each load to determine if there had been failure in the crown region.

The load capacity is a statistically determined fatigue limit of a range of tires tested on a resiliometer under periodic load increases at different step durations.

Treadwear was obtained under highway and au- toroute driving conditions under maximum load and inflation pressure conditions at a speed range of 60-100 Km/h.

Further testing on the pressure distribution in the footprint of the tire showed that the tire according to the invention has a more even pressure distribution than the prior art tire.

## Claims

1. A truck tire (110) of radial carcass (111) construction, having an aspect ratio SH/SW of approximately 0.65 not exceeding 0.7, where SW is defined as the maximum axial width across the tire as molded, and SH is the maximum radial height of the tread portion (115) at the mid-circumferential plane M-M from a cylindrical plane passing through the heel of the bead portions (112), a crown region (114) with a ground contacting tread portion (115) of a distinct treadwidth (TW), a belt reinforcement (116) extending circumferentially around the carcass (111) beneath the tread portion (115) and a pair of annular elastomeric wedges (117) inserted between the axially outer margins of the belt reinforcement (116) and the radial carcass (111), the crown region (114) including an area of concentricity (CM) in which the ground contacting external surface of the tread portion (115) is concentric with the carcass ply (111), the belt reinforcement (116) extending axially beyond the area of concentricity (CM), wherein
(1) the area of concentricity (CM) extends axially between 0.75 and 0.85 of the treadwidth (TW),
(2) the maximum thickness (WG) of he wedges (117) between the carcass ply (111) and the belt reinforcement (116) is between 0.1 and 0.2 of the maximum thickness (SG) between the mid ply line (120) of the carcass ply (111) and the external surface of said tread portion (115),
(3) the tire has a cross-sectional configuration in which the tread portion (115) has a radius of curvature TR such that the ratio TR/SW is greater than 2.0,
(4) the belt reinforcement (116) extends a distance (X) of about 7 % of the treadwidth (TW) beyond the area of concentricity (CM) of the tire, characterized in that
(5) the carcass ply (111) follows a natural shape contour from a first point A located radially adjacent each bead portion to a second point B beneath each axially outer edge of the belt reinforcement (116),
(6) and that said second points B are coincident with the axial extent of said central area of concentricity (CM) of the tread portion,

2. Atrucktire as claimed in Claim 1 in which the center thickness (CG) of the crown region (114) at the mid-circumferencial line M-M of the tire as measured between the external surface of the tread portion and the mid ply line (120) of the carcass ply (111) is between 0.90 and 1.0 SG.

3. A truck tire as claimed in Claim 1 or 2, characterized in that the belt reinforcement (116) includes a plurality of belts plies (121, 122, 123, 124,) the radially innermost ply (124) of which has a lesser width than its adjacent outer ply (123), said innermost ply (124) for its whole axial width being substantially parallel with and adjacent to the carcass ply (111), and the wedges (117) being inserted between the carcass ply (111) and the respective portions of the adjacent belt (123) that extend axially beyond the innermost ply (124).

4. A truck tire as claimed in Claim 3, wherein the belt ply (123) adjacent the innermost ply (124) extends axially beyond the inner ply (124) on each side thereof for a distance equal to about 5 % of the treadwidth (TW).

## Patentansprüche

1. Luftreifen (110) für LKW mit einer Radialkarkassenkonstruktion (111) mit einem Querschnittslängenverhältnis (SH/SW) von ca. 0,65 und nicht mehr als 0,7, wobei (SW) definiert ist als die maximale axiale Breite über den Reifen wie er geformt ist, und (SH) als die maximale radiale Höhe des Laufflächenabschnitts (115) an der mittleren Umfangsebene (Äquitorialebene) M-M von einer zylindrischen Ebene durch die Wulstabrundung der Wulstabschnitte (112), mit einem Kronenbereich (114) mit einem den Boden berührenden Laufflächenabschnitt (115) mit einer verschiedenen Laufflächenbreite (TW), mit einer Gurtverstärkung (116), die sich in Umfangsrichtung um die Karkasse (111) unterhalb des Laufflächenabschnitts (115) erstreckt, und mit einem Paar von ringförmigen elastomeren Keilen (117), die zwischen den axial äußeren Rändern der Gurtverstärkung (116) und der radialen Karkasse (111) eingesetzt sind, wobei der Kronenbereich (114) einen konzentrischen Bereich (CM) umfaßt, in welchem die den Boden berührende äußere Fläche des Laufflächenabschnitts (115) konzentrisch zu der Karkassenlage (111) ist und wobei die Gurtverstärkung (116) sich in Axialrichtung über den konzentrischen Bereich (CM) hinaus erstreckt, wobei
(1) der konzentrische Bereich (CM) sich axial zwischen 0,75 und 0,85 der Laufflächenbreite (TW) erstreckt,
(2) die maximale Dicke (WG) der Keile (117) zwischen der Karkassenlage (111) und der Gurtverstärkung (116) zwischen 0,1 und 0,2 der maximalen Dicke (SG) zwischen der Mittellinie (120) der Karkassenlage (111) und der Außenfläche des Laufflächenabschnitts (115) beträgt,
(3) der Reifen eine Querschnittsgestalt aufweist, in welcher der Laufflächenabschnitt (115) einen Krümmungsradius (TR) aufweist, so daß das Verhältnis TR/SW größer als 2,0 ist,
(4) die Gurtverstärkung (116) sich über eine Strecke (X) von etwa 7 % der Laufflächenbreite (TW) über den konzentrischen Bereich (CM) des Reifens hinaus erstreckt,
dadurch gekennzeichnet, daß die Karkassenlage (111) einer natürlichen Konturform von einem ersten Punkt A, der radial angrenzt an jeden Wulstabschnitt, zu einem zweiten Punkt B unterhalb jedes axial äußeren Randes der Gurtverstärkung (116) folgt, und daß die zweiten Punkte B zusammenfallen mit der axialen Ausdehnung des zentralen konzentrischen Bereichs (CM) des Laufflächenabschnitts (115).

2. Luftreifen nach Anspruch 1, wobei die Dicke (CG) in der Mitte des Kronenbereichs (114) an der Linie der mittleren Umfangsebene M-M des Reifens gemessen zwischen der Außenfläche des Laufflächenabschnitts und der Mittellinie (120) der Karkassenlage (111) zwischen 0,90 und 1,0 SG liegt.

3. Luftreifen nach Anspruch 1 oder 2, dadurch gekennzeichnet, daß die Gurtverstärkung (116) eine Vielzahl von Gurtlagen (121, 122, 123, 124) aufweist, daß die radial innerste Lage (124) eine geringere Breite als die außen benachbarte Lage (123) aufweist, daß die innerste Lage (124) über ihre gesamte axiale Breite im wesentlichen parallel und benachbart zu der Karkassenlage (111) ist, und daß die Keile (117) zwischen der Karkassenlage (111) und den jeweiligen Abschnitten des angrenzenden Gurtes (123) eingesetzt ist, welche sich axial überdie innerste Lage (120) hinaus erstreckt.

4. Luftreifen nach Anspruch 3, wobei die Gurtlage (123) angrenzend an die innerste Lage (124) sich axial über die innere Lage (124) auf jeder Seite über eine Länge erstreckt, die gleich ist etwa 5 % der Laufflächenbreite (TW).

## Revendications

1. Bandage pneumatique (110) pour camion, du type à carcasse radiale (111), ayant un rapport hauteur/section SH/SW d'environ 0,65,n'excédant pas 0,7, SW étant définie comme la largeur axiale maximale en travers du bandage pneumatique à l'état moulé, et SH étant la hauteur radiale maximale de la bande de roulement (115) au plan circonférentiel médian M-M à partir d'un plan cylindrique passant par le talon des parties de bourrelet (112), une zone de sommet (114) avec une bande de roulement (115) d'une largeur distincte (TW), entrant en contact avec le sol, une ceinture de renforcement (116) s'étendant circon- férentiellement autour de la carcasse (111) en dessous de la bande de roulement (115), et une paire de coins annulaires (117) en matière élastomère intercalés entre les bords extérieurs axiaux de la ceinture de renforcement (116) et la carcasse radiale (111), la zone de sommet (114) comprenant une aire de concentricité (CM) dans laquelle la surface extérieure de la bande de roulement (115) entrant en contact avec le sol est concentrique à la nappe de carcasse (111), la ceinture de renforcement (116) s'étendant axialement au delà de l'aire de concentricité (CM), dans lequel :
1) l'aire de concentricité (CM) s'étend axialement entre 0,75 et 0,85 de la largeur (TW) de la bande de roulement,
2) l'épaisseur maximale (WG) des coins (117) entre la nappe de carcasse (111) et la ceinture de renforcement (116) se situe entre 0,1 et 0,2 de l'épaisseur maximale (SG) entre la ligne médiane (120) de la nappe de carcasse (111) et la surface externe de ladite bande de roulement (115),
3) le bandage pneumatique a une configuration, en coupe transversale, dans laquelle la bande de roulement (115) a un rayon de courbure TR tel que le rapport TR/SW est supérieur à 2,0,
4) la ceinture de renforcement (116) s'étend à une distance (X) d'environ 7% de la largeur TW de la bande de roulement, au delà de l'aire de concentricité (CM) du bandage pneumatique,
caractérisé en ce que :
5) la nappe de carcasse (111) suit un contour de forme naturelle, à partir d'un premier point A situé radialement en position adjacente à chaque partie du bourrelet, jusqu'à un deuxième point B en dessous de chaque bord extérieur axial de la ceinture de renforcement (116),
6) et en ce que lesdits deuxièmes points B coïncident avec l'étendue axiale de ladite aire centrale de concentricité (CM) de la bande de roulement.

2. Bandage pneumatique pour camion selon la revendication 1, dans lequel l'épaisseur centrale (CG) de la zone de sommet (114) dans le plan circonférentiel médian M-M du bandage pneumatique, telle que mesurée entre la surface extérieure de la bande de roulement et la ligne médiane (120) de la nappe de carcasse (111), se situe entre 0,90 et 1,0 fois l'épaisseur maximale SG.

3. Bandage pneumatique pour camion selon la revendication 1 ou 2, caractérisé en ce que la ceinture de renforcement (116) comprend une pluralité de nappes de ceintures (121, 122, 123, 124), parmi lesquelles la nappe située radialement le plus à l'intérieur (124) a une largeur moindre que celle de sa nappe extérieure adjacente (123), ladite nappe intérieure (124) étant, sur toute sa longueur axiale, pratiquement parallèle et adjacente à la nappe de carcasse (111), les coins (117) étant intercalés entre la nappe de carcasse (111) et les parties respectives de la ceinture adjacente (123) qui s'étendent axialement au delà de la nappe intérieure(124).

4. Bandage pneumatique pour camion selon la revendication 3, dans lequel la nappe de ceinture (123) adjacente à la nappe intérieure (124) s'étend axialement, de chaque côté, au delà de celle-ci sur une distance égale à environ 5% de la largeur (TW) de la bande de roulement.
